# EUROPEAN PATENT SPECIFICATION

(11) **EP 0 871 137 B1**
(45) Date of publication and mention of the grant of the patent: **09.02.2000**
(21) Application number: 97112756.8
(22) Date of filing: 24.07.1997
(51) Int. Cl.: G06F 19/00

(54) **Simulation device for fostering a virtual creature**
Simulationsanlage zum Züchten eines virtuelles Lebewesens
Dispositif de simulation pour l'élevage d'une créature virtuelle

(30) Priority: 31.03.1997 JP 9641397
(43) Date of publication of application: 14.10.1998
(73) Proprietor: Kabushiki Kaisha Bandai, Taito-ku Tokyo (JP); Kabushiki Kaisha Wiz, Chuo-Ku, Tokyo (JP)
(72) Inventor: Yokoi, Akihiro, c/o Kabushiki Kaisha Wiz, Chuo-ku, Tokyo (JP)
(74) Representative: Alber, Norbert, Dipl.-Ing.

(56) References cited:
- EP-A- 0 712 074
- SULLIVAN K.: "A Chicken in Every Pocket, Available from Internet:<URL:http://www.washingtonpost.co m/wp-srv/inatl/asia/jan/29/chicken.htm" WASHINGTON POST FOREIGN SERVICE, 25 January 1997, page A01 XP002048352
- DYER A.: "Creatures" PERSONAL COMPUTER WORLD , VNU BUSINESS PUBLICATIONS, 1 February 1997, page 96 XP002048353 LONDON , GB
- BLUMBERG B M ET AL: "MULTI-LEVEL DIRECTION OF AUTONOMOUS CREATURES FOR REAL-TIME VIRTUAL ENVIRONMENTS" COMPUTER GRAPHICS PROCEEDINGS, LOS ANGELES, AUG. 6 - 11, 1995, 6 August 1995, pages 47-54, XP000546215 COOK R
- FUJITA T ET AL: "SIMULATED WORLD OF HYPOTHETICAL LIFE FORMS - VIRTUAL CREATURES -" ADVANCES IN HUMAN FACTORS / ERGONOMICS, vol. 2, 8 August 1993, pages 663-668, XP000614819

## Description

### BACKGROUND OF THE INVENTION

### 1. Field of the Invention:

The present invention relates to a simulation device for fostering a virtual creature according to the preamble of claim 1.

### 2. Description of Related Art:

In recent years, various electronic game devices for raising a pet such as a dog or a cat in a predetermined screen, have been proposed and sold. There have been known conventional electronic game devices of this kind disclosed in, for example, Japanese Unexamined Patent Publication No. JP-A-7-261962 or Japanese Unexamined Patent Publication No. JP-A-7-281819.

According to the conventional example disclosed in Japanese Unexamined Patent Publication No. JP-A-7-261962, a light emitting element and a light receiving element are installed in a main body of a device and an infrared ray emitted from the light emitting element is reflected by hand or the like and received by the light receiving element by noncontact operation of a user (a player). Further, data of a plurality of patterns of dog characters and biorhythms of the dog characters are stored in a memory and accordingly, data of the dog characters in correspondence with a number of times of the noncontact operation and biorhythms of the day are selectively read from the memory and are displayed. Thereby, a character image also in correspondence with physical conditions of the dog character can be selectively displayed.

According to the conventional example disclosed in Japanese Unexamined Patent Publication No. JP-A-7-281819 a light emitting element and a light receiving element are installed in a main body of a device and an infrared ray from the light emitting element is reflected by hand or the like and received by the light receiving element by noncontact operation of a user by which a noncontact operation distance is detected. Further, a plurality of kinds of dog character data where motion of a dog is changed such as a looking-back dog or a paw-raising dog or the like and effective sound data are stored in a memory and accordingly, the dog character data are selectively read and displayed in correspondence with the noncontact operation distance and an effective sound thereof is emitted from a speaker. In this way, the character image in compliance with gesticular order by the hand of the user can selectively be displayed.

However, according to both of the above-described conventional examples, an instruction is issued to a character image by a unilateral order from the user and there has been no conventional example where a player responds to a call or a request from the character image.

From SULLIVAN K.: "A Chicken in Every Pocket", available from Internet:<URL: http://www.washingtonpost.com/wp-srv/inatl/asia/jan/29/chicken.htm WASHINGTON POST FOREIGN SERVICE, 25 January 1997, page A01, a key-chain computer game device for fostering a virtual creature having means for inputting a treatment for fostering the virtual creature, a display unit for displaying the virtual creature and a storing unit for storing control data for fostering the virtual creature is known. Further, said prior art device has a control unit whereby when the treatment is input from the inputting means, the control data corresponding to the treatment is read from the storing unit and a control for fostering the virtual creature is carried out based on the read control data. The known device is not capable of reacting to a call from an external source.

EP-A-0 712 074 teaches a production system simulating changes of a virtual world and behaviour of virtual creatures inhabiting it. In particular, the known system is capable of simulating the status in the system corresponding to the lapse of time while the system is stopped upon restarting.

According to BLUMBERG B M ET AL: "MULTI-LEVEL DIRECTION OF AUTONOMOUS CREATURES FOR REAL-TIME VIRTUAL ENVIRONMENTS" COMPUTER GRAPHICS PROCEEDINGS, LOS ANGELES, AUG. 6 - 11, 1995, 6 August 1995, pages 47-54 it is known to build behaviour-based autonomous creatures for interactive virtual environments. A control which allows an external entity to direct an autonomous creature at the motivational level, the task level and the direct motor level is presented.

According to FUJITA T ET AL: "SIMULATED WORLD OF HYPOTHETICAL LIFE FORMS - VIRTUAL CREATURES-" ADVANCES IN HUMAN FACTORS/ERGONOMICS, vol.2, 8 August 1993, pages 663-668 a system with which a person can interact with virtual creatures in a simulated virtual world is known. The virtual creatures of the known system do not randomly encounter adverse situations which would require immediate activity of a player. Consequently, the known system does not provide an exciting game.

### SUMMARY OF THE INVENTION

The present invention has been devised in view of the above drawbacks and it is an object of the present invention to provide a simulation device for fostering a virtual creature, where a virtual creature upon encountering an adverse event, is capable of being fastered in response to a call from an external source.

This object is achieved by a simulation device having the features of claim 1. Additional features are proposed according to the subclaims.

### BRIEF EXPLANATION OF THE DRAWINGS

Fig. 1 is a block diagram of essential portions of the simulation device for fostering a virtual creature according to the present invention;
Fig. 2 is a front view of the simulation device for fostering a virtual creature according to the present invention;
Fig. 3 is an explanatory view showing an example of a display unit of Fig. 2;
Fig. 4 is an explanatory view showing an example of a liquid crystal screen of the display unit of Fig. 2;
Fig. 5 is a circuit diagram of the simulation device for fostering a virtual creature in Fig. 2;
Fig. 6 is a flowchart showing a main control treatment in the simulation device for fostering a virtual creature of Fig. 2;
Fig. 7 is a flowchart showing a control treatment at a second growth procedure in the simulation device for fostering a virtual creature of Fig. 2;
Fig. 8 is a flowchart showing a control treatment at the second growth procedure in the simulation device for fostering a virtual creature of Fig. 2;
Fig. 9 is a flowchart showing a control treatment at the second growth procedure in the simulation device for fostering a virtual creature of Fig. 2;
Fig. 10 is a flowchart showing a control treatment at the second growth procedure in the simulation device for fostering a virtual creature of Fig. 2;
Fig. 11 is an explanatory view showing an input reception time in the simulation device for fostering a virtual creature of Fig. 2;
Fig. 12 is a flowchart showing the operation when an influencing creature is manifested;
Fig. 13 is a flowchart showing the operation when a virtual creature conducts an action different from a normal action; and

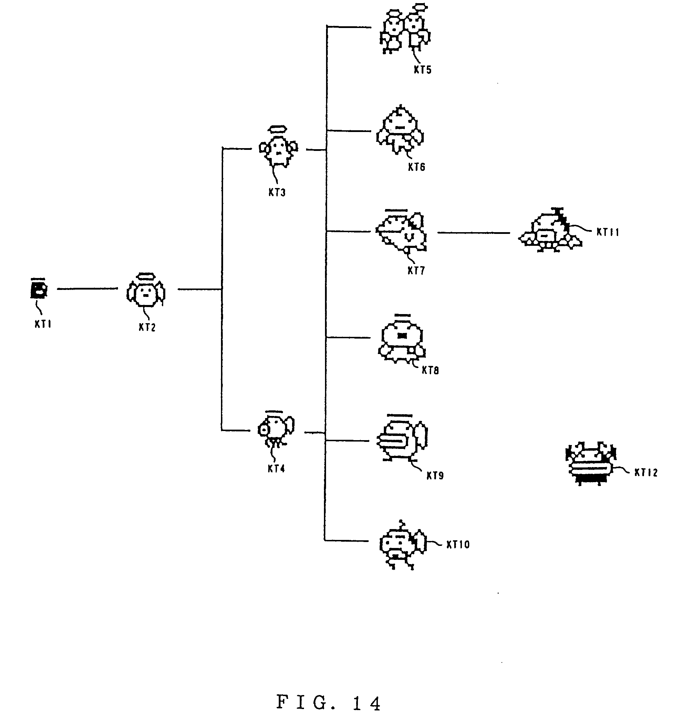

Fig. 14 is an explanatory view showing changes of virtual creatures which reach growth stages.

### DETAILED DESCRIPTION OF THE PREFERRED EMBODIMENTS

An explanation will be given of an example of an embodiment of a simulation device for fostering a virtual creature according to the present invention in reference to the drawings.

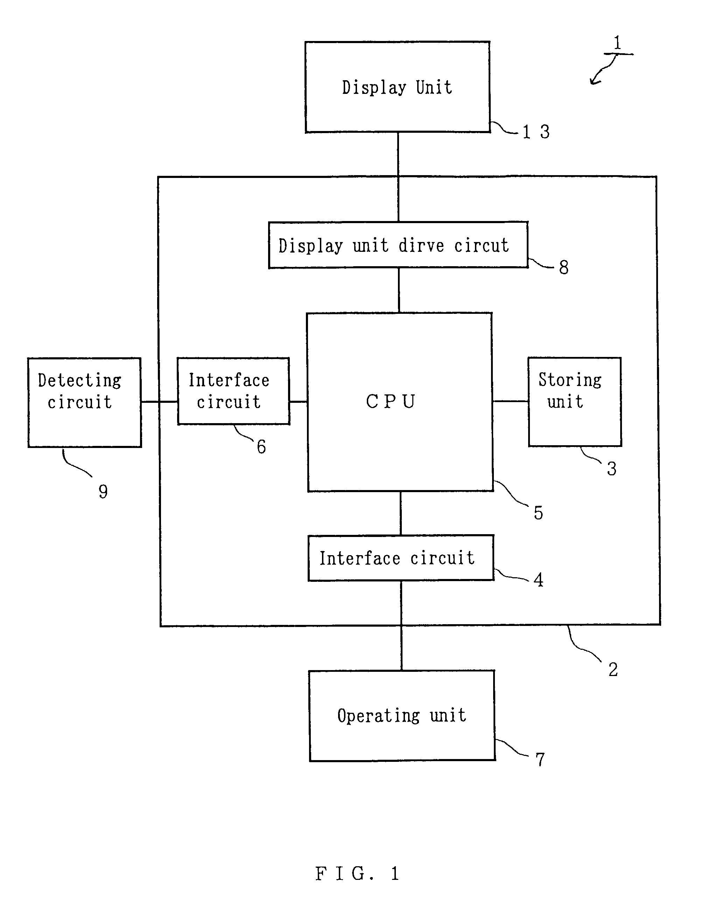

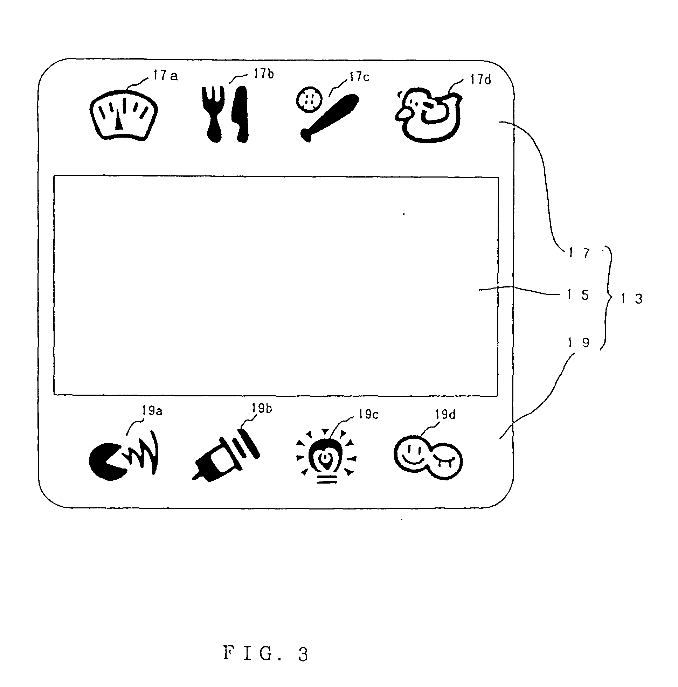

A simulation device 1 for fostering a virtual creature according to the first aspect of the present invention, is provided with mark display units 17 and 19 for displaying a plurality of kinds of treatments for fostering a virtual creature individually by marks as shown by Fig. 1 through Fig. 3. A plurality of marks of a check meter mark 17a, a food mark 17b, a game mark 17c and a rest room mark 17d are displayed in the mark display unit 17.

Further, a plurality of marks of a discipline mark 19a, a treatment mark 19b, an illumination mark 19c and a call mark 19d are displayed in the mark display unit 19.

Key switches SW1, SW2 and SW3 installed at the lower side of the mark display unit 19 are switches for conducting treatments in response to calls from the virtual creature, which constitute inputting means each for inputting a corresponding treatment by selecting a specific one from the plurality of marks.

The key switch SW1 is a switch for selectively displaying a desired mark from the mark display units 17 and 19 and at every time of pushing down the key switch SW1, the check meter mark 17a, the food mark 17b, the game mark 17c, the rest room mark 17d, the discipline mark 19a, the treatment mark 19b and the illumination mark 19c are switched and displayed in this order. The key switch SW2 is a switch for finally determining a selected mark and the key switch SW3 is a switch for canceling a displayed mark.

When, for example, the check meter mark 17a is selected by operating the key switches SW1, SW2 and SW3, respective values of age, weight, a humor parameter, a hungriness parameter and a degree of disciplining the virtual creature can be confirmed in a meter display. When the food mark 17b is selected, the virtual creature can be fed with food such as a sweet. When the game mark 17c is selected, a player can play a game with the virtual creature. When the rest room mark 17d is selected, if the virtual creature evacuates droppings, they can be cleaned by flushing water. When the discipline mark 19a is selected, discipline can be conducted in response to a selfish call from the virtual creature. Further, when the treatment mark 19b is selectively displayed, if there is an abnormality in the virtual creature, the virtual creature can be treated. When the illumination mark 19c is selected, if the virtual creature takes a sleep, illumination of a room can be put off.

Naturally, a treatment other than the above-described may be formed by a mark corresponding to the treatment and the mark may be input by selecting the key switches SW1, SW2 and SW3.

A device main body 11 includes a storing unit 3 for storing control data for fostering a virtual creature. The device includes a control unit (CPU) 5 where, when a treatment for fostering the virtual creature is input by operating the inputting means, control data in correspondence thereto is read from the storing unit 3 and a control for fostering the virtual creature is conducted based on the read control data. An image display unit 15 is installed at the front face of the device main body 11 and the image display unit 15 is a display unit for displaying the fostered virtual creature.

Further, the main body device 11 is provided with detecting means for detecting a call from an external source. The control unit 5 is provided with concealing means for randomly concealing a display of the virtual creature from the image display unit 15 and releasing means for unconcealing of the virtual creature when the call from an external source is detected under a situation where the virtual creature is concealed.

Pertinent sensors such as a sound sensor for detecting a sound or a human voice in a specific frequency band, a vibration sensor for detecting vibration applied to the main body device 11, a light sensor for detecting a specific light and the like are used for the detecting means.

When the simulation device 1 for fostering a virtual creature is small-sized, for example, when the device is formed compactly such that it is portable, ROM, EEPROM, SRAM or the like is fixedly installed as the above-described storing unit 3. Further, the storing unit 3 may be installed attachably and detachably in a style of a memory cassette.

When the simulation device 1 for fostering a virtual creature is large-sized, for example, when the device is integrated into a personal computer system, a pertinent record medium, for example, CD-ROM, CD-R, a magnetic disk, a photomagnetic disk, DVD or the like is attachably and detachably installed as the storing unit 3.

The simulation device 1 for fostering a virtual creature according to the second aspect of the present invention, includes mark display units 17 and 19 for displaying a plurality of kinds of treatments for fostering the virtual creature as shown by Fig. 1 through Fig. 3. A plurality of marks of the check meter mark 17a, the food mark 17b, the game mark 17c and the rest room mark 17d are displayed in the mark display unit 17.

Further, a plurality of marks of the discipline mark 19a, the treatment mark 19b, the illumination mark 19c and the call mark 19d are displayed in the mark display unit 19.

The key switches SW1, SW2 and SW3 installed at the lower side of the mark display unit 19 are switches for conducting treatments in response to calls from the virtual creature, which constitute inputting means each for inputting a corresponding treatment by selecting a specific mark from the plurality of marks.

The key switch SW1 is a switch for selecting and displaying a desired mark from the mark display units 17 and 19 and at every time of pushing down the key switch SW1, the check meter mark 17a, the food mark 17b, the game mark 17c, the rest room mark 17d, the discipline mark 19a, the treatment mark 19b and the illumination mark 19c are switched and displayed in this order. The key switch SW2 is a switch for determining a selected mark and the key switch SW3 is a switch for canceling a displayed mark.

When, for example, the check meter mark 17a is selected by operating the key switches SW1, SW2 and SW3, respective values of age, weight, a humor parameter, a hungriness parameter and a degree of disciplining the virtual creature can be confirmed in a meter display. When the food mark 17b is selected, the virtual creature can be fed with food such as a sweet. When the game mark 17c is selected, a player can play a game with the virtual creature. When the rest room mark 17d is selected, if the virtual creature evacuates droppings, they can be cleaned by flushing water. When the discipline mark 19a is selected, discipline can be conducted in response to a selfish call from the virtual creature. Further, when the treatment mark 19b is selectively displayed, if an abnormality is in the virtual creature, the virtual creature can be treated. If the illumination mark 19c is selected, when the virtual creature takes a sleep, illumination of a room can be put off.

Naturally, a treatment of a kind other than those of the above-described, may be formed by a mark and the mark may be input by selecting the key switches SW1, SW2 and SW3.

The device main body 11 includes the storing unit 3 for storing control data for fostering the virtual creature. The device includes a control unit 5 whereby, when a treatment for fostering the virtual creature is input by operating the inputting means, control data in correspondence therewith is read from the storing unit 3 and a control for fostering the virtual creature is carried out based on the control data. The image display unit 15 is installed at the front face of the device main body 11 and the image display unit 15 is a display unit for displaying the fostered virtual creature.

The main body device 11 includes detecting means for detecting a call from an external source. The control unit 5 includes manifesting means for randomly manifesting an influencing creature for effecting an adverse effect on the growth of the virtual creature and repelling means for repelling the influencing creature when the call from an external source is detected under a situation where the influencing creature is manifested. Further, the virtual creature and/or the influencing creature are displayed at the display unit installed at the front face of the device main body 11.

Pertinent sensors such as a sound sensor for detecting a sound or human voice at a specific frequency band, a vibration sensor for detecting vibration applied to the main body device 11, a light sensor for detecting a specific light and the like are used in the detecting means.

When the simulation device 1 for fostering a virtual creature is small-sized, for example, when the device is formed compactly such that it is portable, ROM, EEPROM, SRAM or the like is fixedly installed as the above-described storing unit 3. Further, the storing unit 3 may be installed attachably and detachably in a style of a memory cassette.

When the simulation device 1 for fostering a virtual creature is large-sized, for example, when the device is integrated into a personal computer system, the storing unit 3 may be installed attachably and detachably by a pertinent record medium, for example, CD-ROM, CD-R, a magnetic disk, a photomagnetic disk, DVD or the like.

Next, an explanation will be given of an embodiment of a simulation device for fostering a virtual creature according to the third aspect of the present invention.

As shown by Fig. 1 through Fig. 3, the simulation device for fostering a virtual creature according to the third aspect of the present invention, includes inputting means (key switches SW1, SW2 and SW3) for inputting treatments for fostering the virtual creature. For example, the player can take care of the virtual creature by preparing food, playing a game or putting off illumination by selecting some marks in the mark display units 17 and 19 by operating the key switches SW1, SW2 and SW3.

Further, the device main body includes the storing unit 3 for storing control data for fostering the virtual creature. The device also includes the control unit 5 whereby, when a treatment for fostering the virtual creature is input by operating the inputting means, control data in correspondence therewith is read from the storing unit 3 and a control for fostering the virtual creature is carried out based on the read control data.

The device also includes a detecting circuit 9 for detecting a call from an external source. The control unit 5 includes operating means for having the virtual creature conduct randomly an action that is different from a normal action and rectifying means whereby when a call from an external source is detected under a situation where the virtual creature conducts the action that is different from the normal action, the action is rectified into the normal action. The display unit 13 is installed at the front face of the device main body and the display unit 13 is a display unit for displaying the virtual creature.

When the simulation device 1 for fostering a virtual creature is small-sized, for example, when the device is formed compactly such that it is portable, ROM, EEPROM, SRAM or the like is fixedly installed as the above-described storing unit 3. Further, the storing unit 3 may be installed attachably and detachably in a style of a memory cassette.

When the simulation device 1 for fostering a virtual creature is large-sized, for example, when the device is integrated into a personal computer system, the storing unit 3 may be installed attachably and detachably by a pertinent record medium, for example, CD-ROM, CD-R, a magnetic disk, a photomagnetic disk, DVD or the like.

Next, an explanation will be given of an embodiment of a simulation device for fostering a virtual creature according to the fourth aspect of the present invention.

A plurality of kinds of virtual creatures having different appearances are stored in the storing unit 3. The control unit includes calling means whereby the virtual creature makes a call during a growth procedure. As the calling means, CPU 5 and a buzzer BZ1 or a speaker, or a winking light emitting element, or LED or a pertinent mark display unit or the like that is operated by an instruction of the CPU 5, are used.

Further, the key switches SW1, SW2 and SW3 are provided as inputting means for conducting a treatment in response to a call from the virtual creature. Pertinent switches or noncontact type switches using optical sensors or the like may be used other than push-down switches as the inputting means.

The inputting means includes a means for taking care of the virtual creature and a means for disciplining the virtual creature in response to a call from the virtual creature.

For example, when the food mark 17b is selected by operating the key switches SW1, SW2 and SW3, the virtual creature can be fed with food such as a sweet. When the rest room mark 17d is selected, if the virtual creature evacuates droppings, they can be cleaned by flushing water. In such a case, the key switches SW1, SW2 and SW3 function as the means for taking care of the virtual creature in response to the call from the virtual creature. When the discipline mark 19a is selected by operating the key switches SW1, SW2 and SW3, discipline can be conducted in response to a selfish call from the virtual creature. In that case, the key switches SW1, SW2 and SW3 function as a means for disciplining the virtual creature in response to the call from the virtual creature.

The control unit 5 includes a means for selecting one virtual creature from the stored plurality of kinds of virtual creatures in accordance with a degree of taking care of the virtual creature and a degree of disciplining the virtual creature during a growth procedure, and a means for changing the grown virtual creature into the selected virtual creature.

Next, an explanation will be given of an embodiment of the simulation device 1 for fostering a virtual creature according to the present invention in reference to the drawings.

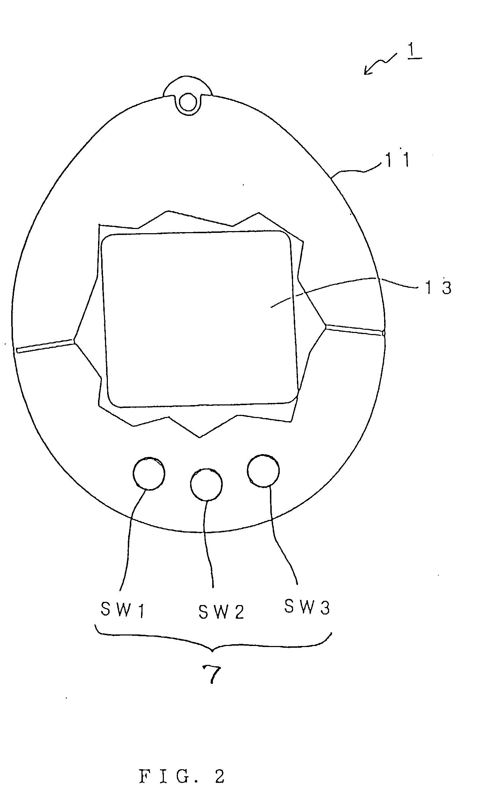

An explanation will first be given of the total constitution of the simulation device 1 for fostering a virtual creature in reference to Fig. 2 through Fig. 4.

As shown by Fig. 2, the device main body 11 is formed to be portable with an egg-like shape. The display unit 13 is installed at the central portion of the main body device 11 and the plurality of key switches SW1, SW2 and SW3 are arranged as an operating unit 7 at the lower side of the display unit 13.

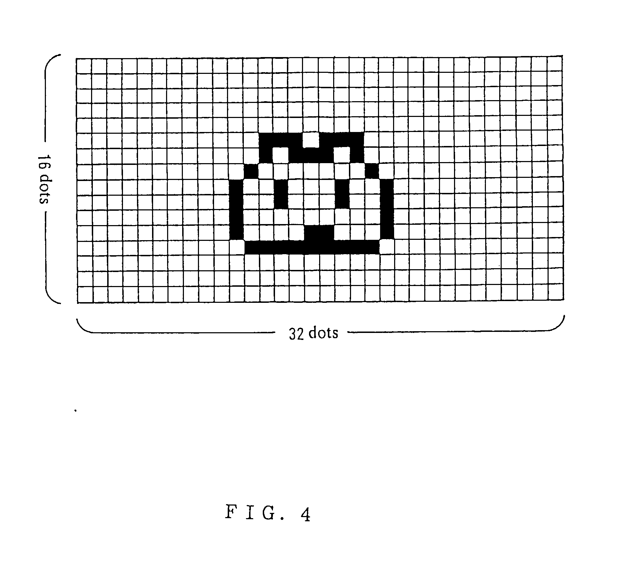

The display unit 13 is constituted by an image display unit 15 for displaying character images of virtual creatures, the mark display unit 17 installed above the image display unit 15 and the mark display unit 19 installed below the image display unit 15. As shown by Fig. 4, the image display unit 15 is formed by a liquid crystal screen of vertical 16 dots x horizontal 32 dots.

A plurality of marks of the check meter mark 17a, the food mark 17b, the game mark 17c and the rest room mark 17d are displayed in the mark display unit 17. Further, a plurality of marks of the discipline mark 19a, the treatment mark 19b, the illumination mark 19c and the call mark 19d are displayed in the mark display unit 19.

The key switches SW1, SW2 and SW3 are switches for conducting a treatment in response to a call from a virtual creature, which constitute inputting means for inputting a corresponding treatment by selecting a specific mark from the plurality of marks.

The key switch SW1 is a switch for selecting and displaying a desired mark in the mark display units 17 and 19 and at every time of pushing down the key switch SW1, the check meter mark 17a, the food mark 17b, the game mark 17c, the rest room mark 17d, the discipline mark 19a, the treatment mark 19b and the illumination mark 19c are switched and displayed in this order. The key switch SW2 is a switch for determining a selected mark and the key switch SW3 is a switch for canceling a displayed mark.

The key switches SW1, SW2 and SW3 constituting the inputting means are provided with a function for taking care of a virtual creature and a function for disciplining the virtual creature in response to a call from the virtual creature.

When the check meter mark 17a is selectively displayed, respective values of age, weight, a humor parameter, a hungriness parameter and a degree of disciplining the virtual creature can be confirmed in a meter display. When the food mark 17b is selectively displayed, the virtual creature can be fed with food such as a sweet. Thereby, every time the virtual creature eats 1 cup of meal, the hungriness parameter is increased by +1. Also, every time the virtual creature eats 1 piece of sweet, the humor parameter is increased by +1. When the game mark 17c is selectively displayed, a player can play a game with the virtual creature. When, for example, the virtual creature wins by 3 times in 5 times of battles as a result of a game, the humor parameter is increased by +1. When the rest room mark 17d is selectively displayed, if the virtual creature evacuates droppings, they can be cleaned by flushing water. When the discipline mark 19a is selectively displayed, discipline can be conducted in response to a selfish call of the virtual creature. When the discipline mark 19a is selectively displayed, the selfishness can be corrected by praising the virtual creature. That is, according to the present invention, the discipline can be conducted and the selfishness of the virtual creature can be corrected by praising the virtual creature in response to the selfish call from the virtual creature.

When the treatment mark 19b is selectively displayed, if an abnormality is in the virtual creature, the virtual creature can be treated.

When the illumination mark 19c is selectively displayed, if the virtual creature takes a sleep, illumination of a room can be put off.

The call mark 19d is a mark for displaying a call from the virtual creature. The switch-on of the call mark 19d is controlled by CPU 5 and the call mark 19d constitutes a portion of a calling means by which the virtual creature makes a call during a growth procedure.

The device main body includes a clock and the key switches SW1, SW2 and SW3 are used for adjusting the time of the included clock.

A reset switch SW4 is installed on the back face of the device main body 11. The simulation of growing a virtual creature can be restored to an initial setting by operating the reset switch SW4.

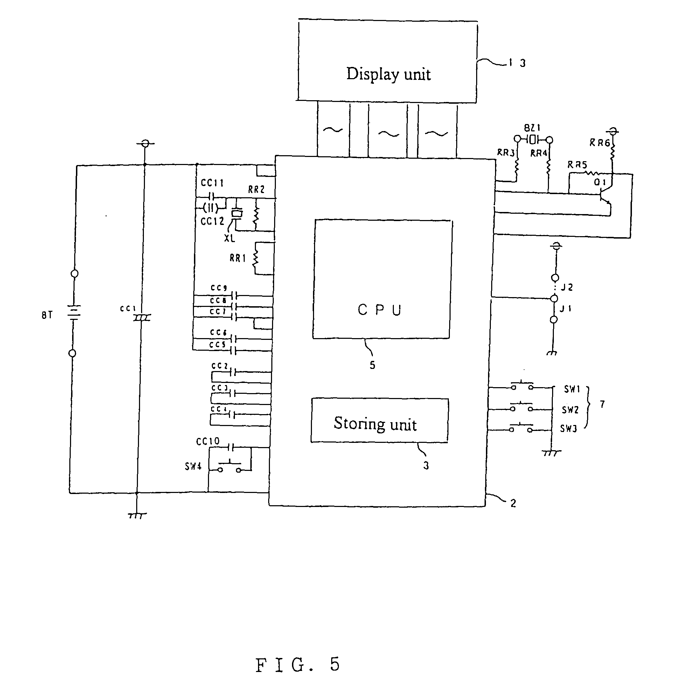

Next, an explanation will be given of the constitution of a circuit unit and a peripheral portion thereof integrated to the device main body 11 in reference to Fig. 1 and Fig. 5.

The above-described display unit 13 is connected to the control device 2 and the operating unit 7 is connected to a control device 2. The control device 2 is formed by one chip of an integrated circuit. The key switches SW1, SW2 and SW3 and the reset switch SW4 are connected to the control device 2. A battery BT, an oscillator XL, capacitors CC1 through CC12 and resistors RR1 through RR6 are connected to the control device 2.

A buzzer BZ1 is connected to the control device 2 via the resistors RR3 and RR4 and a transistor Q1 and the resistors RR5 and RR6 are connected thereto. The circuit unit including the buzzer BZ1 and the transistor Q1 constitutes the detecting circuit 9 for detecting a sound or a human voice in a specific frequency band. The buzzer BZ1 informs a call from the virtual creature by buzzing when the virtual creature makes the call and serves to function also as the calling means.

The control device 2 includes the storing unit 3 for storing software programs and various control data in respect of a growth simulation for fostering and growing a virtual creature, CPU 5 and work memories or the like of the CPU 5 for reading the software programs and the various control data stored in the storing unit 3 and executing various control treatments based on the software programs and the control data.

CPU 5 is connected to the storing unit 3 and is connected to the operating unit 7 via an interface circuit 4. Further, CPU 5 is connected to the detecting circuit 9 via an interface circuit 6 and is connected to the display unit 13 via a display drive circuit 8.

The control device 2 is provided with the calling means whereby the virtual creature makes a call during a growth procedure. Further, the control device 2 is provided with means for setting growth stages of 1 or 2 or more in accordance with growing the virtual creature, the storing unit 3 for storing a plurality of kinds of grown virtual creatures having different appearances at each of the growth stages and a means for selecting one grown virtual creature from the plurality of kinds of virtual creatures in consideration of contents of treatments in response to the calls during the growth procedure preceding the growth stage.

Further, the control device 2 is provided with a clock pulse forming circuit for forming clock pulses at a predetermined period of time based on oscillation pulses from the oscillator XL, a clock circuit for outputting clock information based on the clock pulses, a timer circuit for outputting timer information based on the clock pulses and the like.

Next, an explanation will be given of the operation of the embodiments according to the present invention.

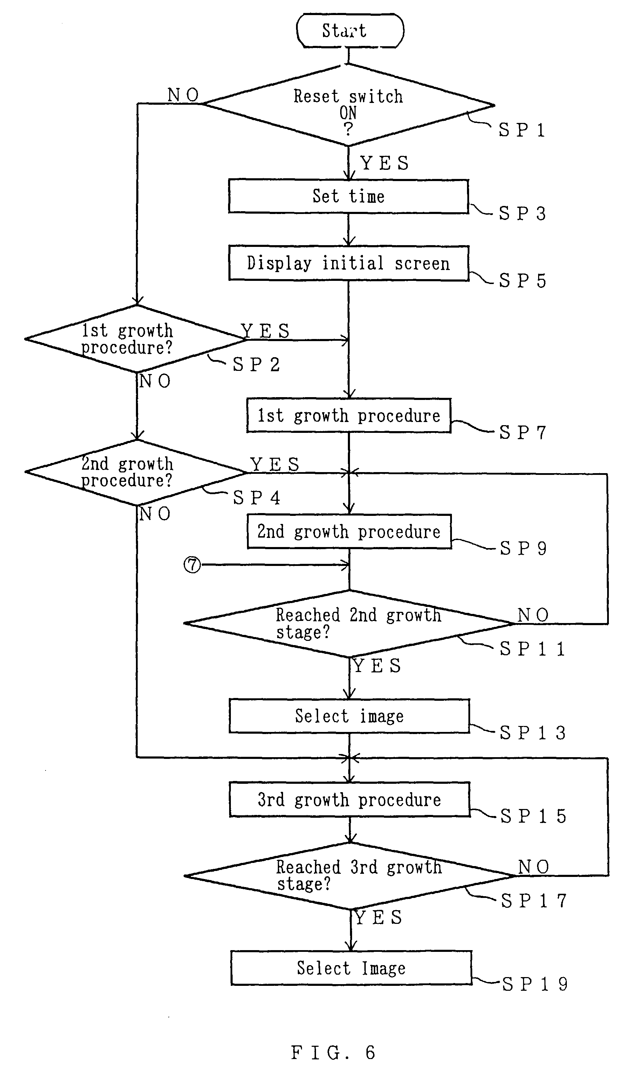

An explanation will first be given of the main flow control in reference to Fig. 6. At step SP1, whether the reset switch SW4 is operated is determined and when the reset switch SW4 is operated, the operation proceeds to step SP3 and time setting is conducted by operating the key switches SW1, SW2 and SW3. The life time of the virtual creature is determined hereinafter based on this time. Accordingly, the virtual creature acts in accordance with real time. For example, a life pattern where the virtual creature starts acting by rising from bed at 9 o'clock in the morning and retires to bed at 8 o'clock in the evening, is set. An initial screen is successively displayed at step SP5. Here, it is assumed that an angel flies down from heaven and an image where, for example, a virtual creature having a shape of an egg falls down from heaven, is displayed and after a predetermined period of time the egg is cracked and a virtual creature of a character image KT1 in a first generation which is a new born baby of an angel, is born.

Next, treatments in respect of a first growth procedure is executed at step SP7. For example, a player takes care of the virtual creature by feeding a meal or a sweet by operating the key switches SW1, SW2 and SW3. Also, the player can conduct rest room cleaning or treatment of an illness in response to a call from the virtual creature.

Next, at step SP9, when approximately 60 minutes have elapsed since the virtual creature of the baby character image KT1 was born, the virtual creature is changed into a virtual creature of a child character image KT2 and the operation proceeds to a second growth procedure. In the second growth procedure, when the virtual creature makes a call, the player takes care of the virtual creature in response to the call having a content necessary for growing the virtual creature similar to the above-described first growth procedure. Also, the player can conduct discipline in response to a call with a selfish content from the virtual creature.

Next, at step SP11, whether the virtual creature reaches a second growth stage is determined. When it is determined in step SP11 that the virtual creature does not reach the second growth stage, the operation returns to the step SP9 again and conducts treatments of the above-described second growth procedure. When it is determined in step SP11 that the virtual creature reaches the second growth stage, the operation proceeds to step SP13.

At step SP13, the player selects one virtual creature from a plurality of kinds of virtual creatures, that is, from virtual creatures of young character images KT3 and KT4.

For example, in the second growth procedure, if in the case where the calls are made from the virtual creature care is not taken 3 times or more in response to calls with contents necessary for growing the virtual creature and discipline is not made 2 times or more in response to calls with a selfish content from the virtual creature, a virtual creature of the young character image KT1 is selected and the virtual creature of the young character image KT1 is changed into a successive virtual creature and is grown thereafter.

Next, the operation proceeds to a third growth procedure at step SP15 and when a call is made from the virtual creature similar to the above-described second growth procedure, care can be taken in response to the call with a content necessary for growing the virtual creature and discipline can be made in response to a call with a selfish content from the virtual creature.

Successively, at step SP17, whether the virtual creature reaches a third growth stage is determined. When it is determined in step SP17 that the virtual creature does not reach the third growth stage, the operation returns to step SP15 again and the above-described treatments of the third growth procedure are conducted. Further, when it is determined in step SP17 that the virtual creature reaches the third growth stage, the operation proceeds to step SP19.

At step SP19, a virtual creature is selected from a plurality of kinds of virtual creatures, that is, from virtual creatures of adult character images KT5 through KT10 in consideration of contents of cares and disciplines in the above-described third growth procedure.

For example, in the third growth procedure, when in the case where calls are made from the virtual creature care is not taken 3 times or more in response to calls with a content necessary for growing the virtual creature and discipline is not made 6 times or more in response to calls with a selfish content from the virtual creature, a virtual creature of the adult character image KT5 is selected and the virtual creature of the adult character image KT5 is changed into a successive virtual creature and grown thereafter. Further, when the character image KT7 is smoothly grown, it changes into a character image KT11. Or, when a certain character image is grown, it changes into a character image KT12 with a predetermined probability.

Further, when the reset switch SW4 is not operated in step SP1, the operation proceeds to step SP2 and whether the virtual creature is at the first growth procedure is determined. When it is determined in step SP2, that the virtual creature is at the first growth procedure, the operation proceeds to step SP7 and treatments of the first growth procedure are conducted. When it is determined in step SP2 that the virtual creature is not at the first growth stage, the operation proceeds to step SP4 and whether the virtual creature is at the second growth procedure is determined. When it is determined in step SP4 that the virtual creature is at the second growth procedure, the operation proceeds to step SP9 and treatments of the second growth procedure are conducted. When it is determined in step SP4 that the virtual creature is not at the second growth procedure, that is, when it is determined that the virtual creature is at the third growth procedure, the operation proceeds to step SP15 and treatments of the third growth procedure are conducted.

Next, a detailed explanation will be given of the second growth procedure representatively among the respective growth procedures.

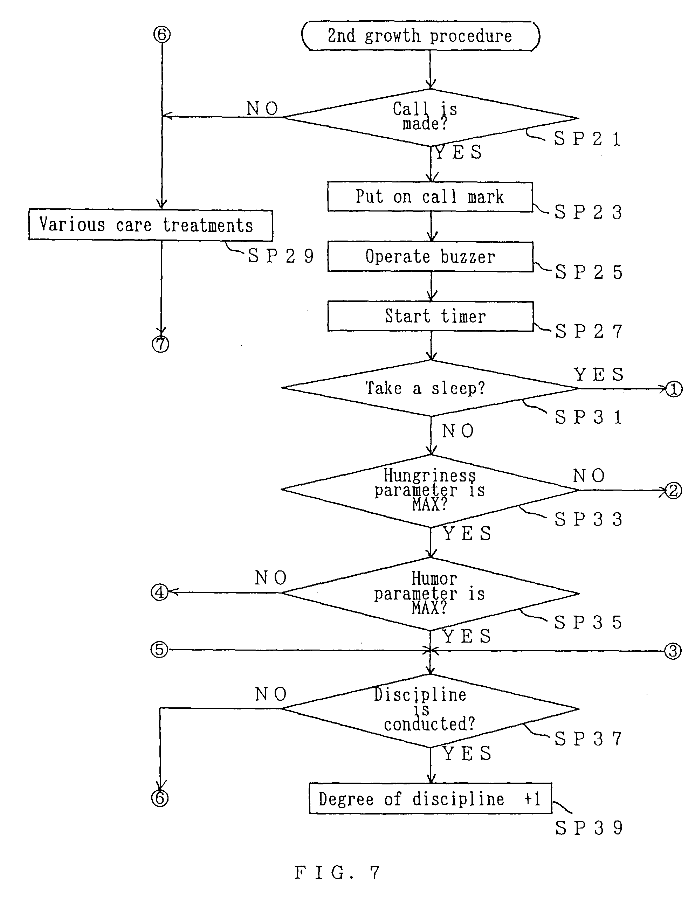

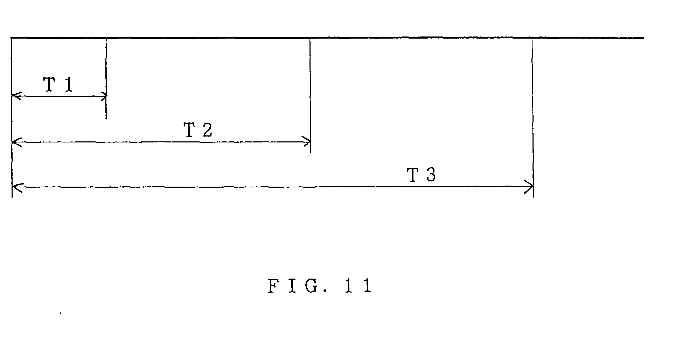

At step SP21 in Fig. 7, whether a call is made from the virtual creature is determined and when a call is made from the virtual creature, the operation proceeds to steps SP23 and SP25 where the call mark 19d is put on and at the same time the buzzer BZ1 is buzzed for a predetermined time T1 as shown by Fig. 11, for example, 3 seconds. Further, at the same time, the operation starts a timer at step SP27 and proceeds to step SP31.

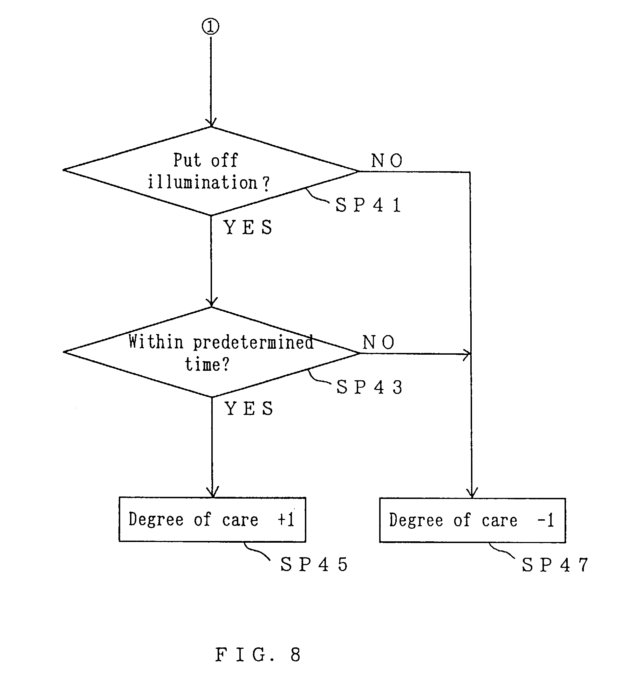

Successively, at step SP31, whether the call from the virtual creature is for taking a sleep is determined. When it is determined in step SP31 that the call is made for taking a sleep, the operation proceeds to step SP41 of Fig. 8 via 1. At step SP41, whether a player puts off illumination by operating the key switches SW1, SW2 and SW3 is determined, and when the illumination is put off, the operation proceeds to step SP43 and whether the time is within a predetermined time is determined. When the illumination is put off within a predetermined time T3 as illustrated by Fig. 11 since the call was made from the virtual creature, for example, within 1 hour, a care has been made pertinently and the operation proceeds to step SP45 whereby a degree of care is increased by +1.

Conversely, when even if the call was made from the virtual creature, the care therefor has not been taken or when the illumination is put off after the predetermined time T3 has elapsed, for example, if 1 hour or more has elapsed, the care has not been taken pertinently and the operation proceeds to step SP47 from step SP41 or step SP43 whereby the degree of care is decreased by 1.

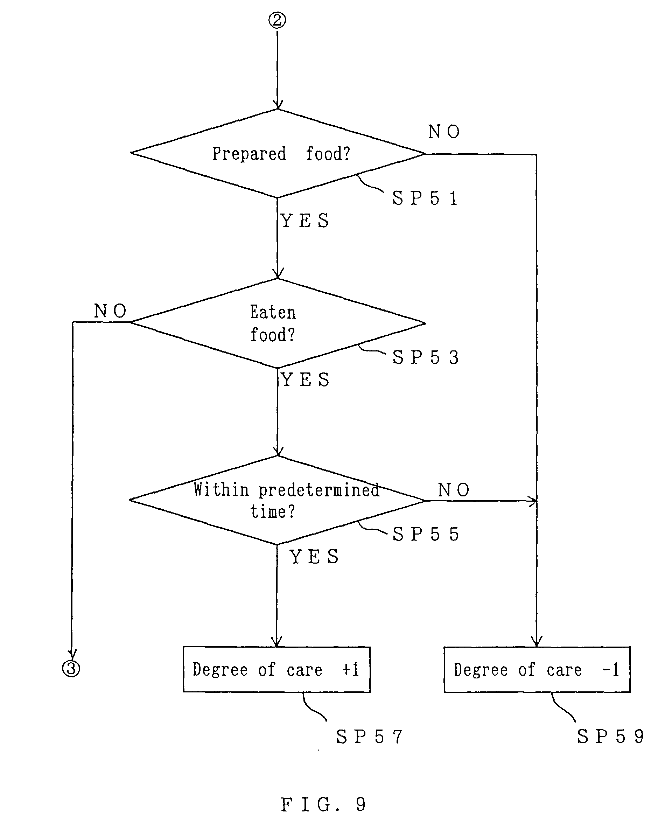

Referring again to Fig. 7, when it is determined in step SP31 that the call is not for taking a sleep, the operation proceeds to step SP33. In step SP33, whether a value of the hungriness parameter of the virtual creature is MAX is determined and when the value of the hungriness parameter is not MAX, the operation proceeds to step SP51 of Fig. 9 via 2. At step SP51, whether the player has prepared food by operating the key switches SW1, SW2 and SW3 is determined and when food has been prepared, the operation proceeds to step SP53. At step SP53, whether the virtual creature has eaten the above-described prepared food is determined, and if the virtual creature has eaten food, the operation proceeds to step SP55. At step SP55, whether the time is within a predetermined time is determined. If the virtual creature has eaten food in a predetermined time T2 as illustrated by Fig. 11 since the call was made from the virtual creature, for example, within 15 minutes, the care has been taken pertinently and the operation proceeds to step SP57 whereby the degree of care is increased by +1.

Conversely, when even if the call was made from the virtual creature, the care therefor has not been taken at all, or if even in the case where the care of food has been taken, the virtual creature is fed with food after a predetermined time T2 has elapsed since the call was made from the virtual creature, for example, 15 minutes or more have elapsed, the care has not been taken pertinently and the operation proceeds to step SP59 from step SP51 or SP55 whereby the degree of care is decreased by 1.

Further, in the case where even if the player has prepared food in step SP51, the virtual creature does not eat food, the operation proceeds to step SP37 of Fig. 7 from step SP53 via 3.

Here, the player conducts an operation in respect of a discipline by determining that the virtual creature is selfish since the virtual creature has not eaten food even if the value of the hungriness parameter of the virtual creature is not MAX. That is, the player selectively displays the discipline mark 19a by operating the key switches SW1, SW2 and SW3 by which the player can conduct the discipline in respect of the virtual creature. In step SP37, whether the operation in respect of a discipline has been conducted is determined and when the operation in respect of a discipline has been conducted, the operation proceeds to step SP39 whereby a degree of discipline is increased by +1.

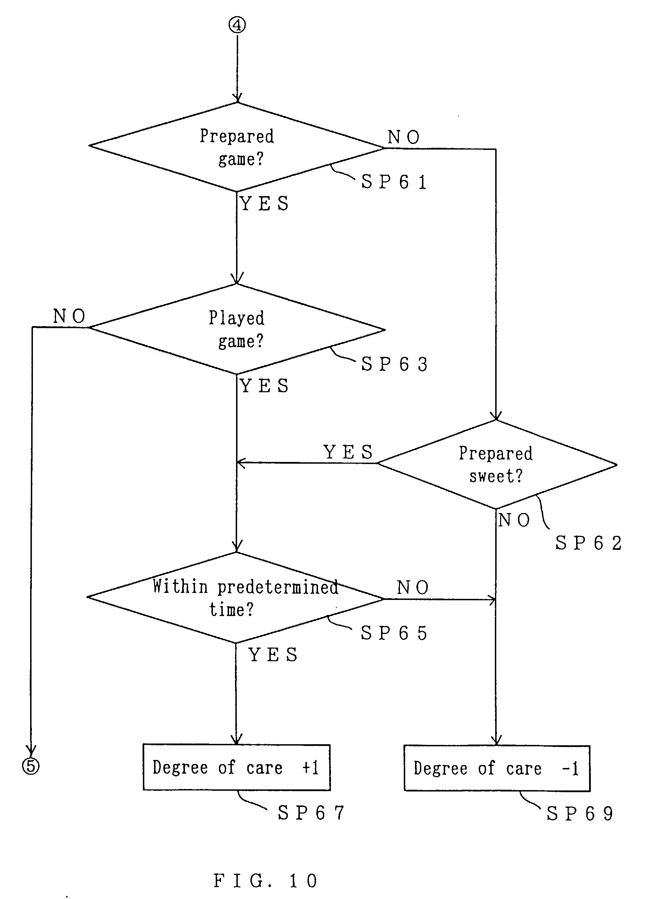

As described above, at step SP33, whether the value of the hungriness parameter of the virtual creature is MAX is determined and when the value of the hungriness parameter is MAX, the operation proceeds to step SP35. At step SP35, whether a value of the humor parameter of the virtual creature is MAX is determined and when the value of the humor parameter is not MAX, the operation proceeds to step SP61 of Fig. 10 via 4. In step SP61, whether the player has prepared a game by operating the key switches SW1, SW2 and SW3 is determined and when the game has been prepared, the operation proceeds to step SP63. In step SP63, whether the virtual creature has played the game is determined, and when the virtual creature has played the game, the operation proceeds to step SP65. In step SP65, whether the time is within a predetermined time is determined. When the virtual creature has played the game within a predetermined time T2 as shown by Fig. 11 since a call was made from the virtual creature, for example, within 15 minutes, a care has been made pertinently and the operation proceeds to step SP67 whereby the degree of care is increased by +1.

When the game has not been prepared in step SP61, the operation proceeds to step SP62. At step SP62, whether the player has prepared a sweet by operating the key switches SW1, SW2 and SW3, is determined and when the player has prepared sweet, the operation proceeds to step SP65. In step SP65, whether the time is within the predetermined time is determined similar to the above-described operation. When a sweet has been prepared within the predetermined time T2 as illustrated by Fig. 11, since the call was made from the virtual creature, for example, within 15 minutes, the care has been taken pertinently and the operation proceeds to step SP67 whereby the degree of care is increased by +1.

Conversely, in the case where even if the call was made from the virtual creature, the care therefor has not been taken at all, or even if in the case where the care of the game has been taken, the game has not been played within the predetermined time T2 since the call was made from the virtual creature, for example, 15 minutes or more have elapsed, the care has not been taken pertinently and the operation proceeds to step SP69 from step SP61 or SP62 whereby the degree of care is decreased by 1.

Further, in the case where the virtual creature has not played the game at step SP63 even if the player has prepared the game, the operation proceeds to step SP37 of Fig. 7 from step SP63 via 5.

Here, the player conducts an operation in respect of a discipline by determining that the virtual creature is selfish since the virtual creature has not played the game even if the value of the humor parameter of the virtual creature was not MAX. That is, the player can conduct a discipline in respect of the virtual creature by selectively displaying the discipline mark 19a by operating the key switches SW1, SW2 and SW3. In step SP37, whether the operation in respect of a discipline has been conducted is determined and when the operation in respect of a discipline has been conducted, the operation proceeds to step SP39 whereby the degree of discipline is increased by +1.

When a call has not been made from the virtual creature at step SP21 or when the operation in respect of a discipline is not conducted at step SP37, the operation proceeds to step SP29 where various care treatments are conducted and thereafter, the operation returns to step SP11 of Fig. 6 via 7.

Incidentally, the operations in other growth stages are the same as the operation of the second growth stage and a detailed explanation thereof will be omitted.

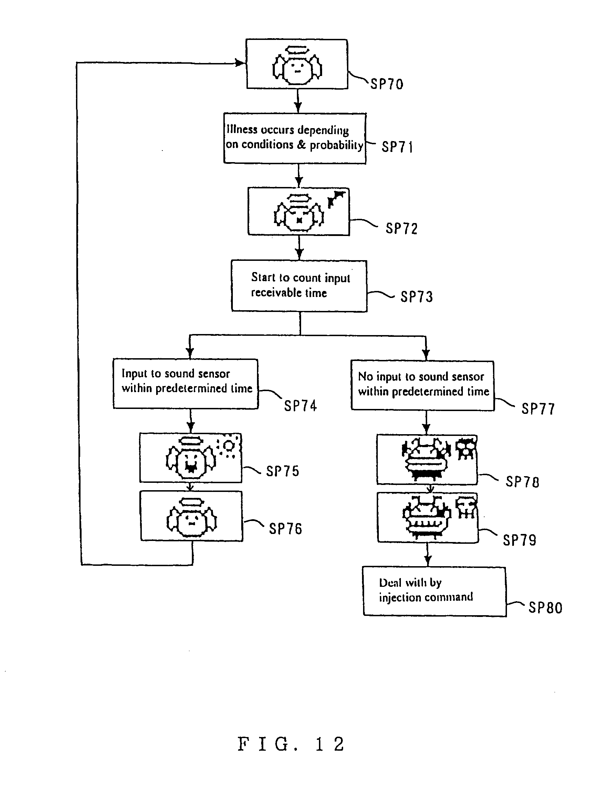

Next, a detailed explanation will be given of the operation when an influencing creature is manifested in the growth stages in reference to Fig. 12.

CPU 5 conducts a control treatment for randomly manifesting an influencing creature effecting an adverse influence on the growth of the virtual creature and when an influencing creature of, for example, a satan or a bat is manifested by the CPU 5, an abnormality is caused in the virtual creature in accordance with conditions at that time and a certain probability (steps SP70 through SP72). At this moment, CPU 5 starts counting an input receivable time of a call from an external source by starting a timer (step SP73). When a call from an external source is made in a predetermined time, that is, when the detecting circuit 9 detects a human voice emitted by the player or a sound from knocking the main body device 11 (step SP74), the abnormality can be avoided and an image of the pleased virtual creature is displayed in the display unit 13 (steps SP75 and SP76).

Further, when a call from an external source is not made in the predetermined time, that is, when a human voice emitted by the player or a sound cannot be detected by the detecting circuit 9 (step SP77), the abnormality cannot be avoided and an image showing the virtual creature which becomes abnormal is displayed in the display unit 13 (steps SP78 and SP79). In this case, the player can treat the virtual creature by making a treatment by selectively displaying the treatment mark 19b (step SP80).

Further, the constitution where an influencing creature effecting an adverse effect on the growth of the virtual creature is randomly manifested and the influencing creature is expelled when the call from an external source is detected under a situation where the influencing creature is manifested as described above, is provided with pertinent variations.

For example, the constitution may be such that an influencing creature such as a bat snatching food when the virtual creature is eating food is manifested and the influencing creature is expelled when a call from an external source is detected.

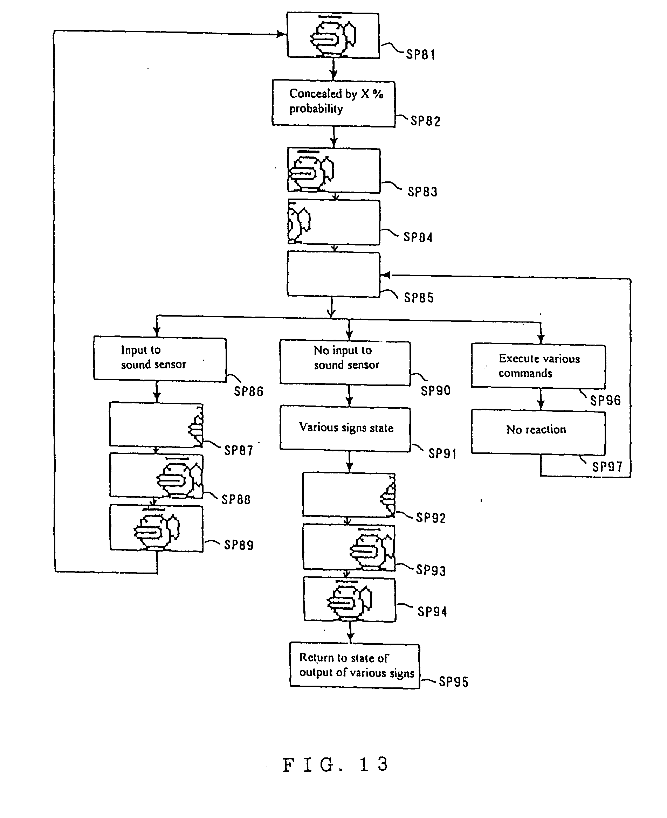

Next, an explanation will be given of the operation in the case where the virtual creature conducts an action which is different from an action at a normal time in the growth stages in reference to Fig. 13.

CPU 5 executes an operational control for having the virtual creature randomly conduct an action that is different from a normal action. For example, CPU 5 carried out a control whereby the displayed virtual creature is concealed from the screen and is brought out of existence, that is, a control for concealing the virtual creature (steps SP81 through SP85).

At this moment, when a call from an external source is made within a predetermined time, that is, when a human voice or a sound emitted by a player is detected by the detecting circuit 9, the virtual creature is gradually unconcealed and displayed (steps SP86 through SP89). Thereby, the virtual creature is rectified to perform a normal action.

Further, when the call from an external source has not been made within the predetermined time, that is, when a human voice emitted by the player cannot be detected by the detecting circuit 9 (step SP90), no change is caused in the display unit 13 even if various commands are input by operating the operating unit 7 (steps SP96 and SP97).

When a call is made from the virtual creature to the player under such a situation, the virtual creature per se is gradually manifested and makes a call to the player (steps SP91 through SP95).

Further, the constitution where the virtual creature is made to conduct randomly the action different from the normal action and the virtual creature is rectified to conduct the normal action when a call from an external source is detected under a situation where the virtual creature conducts the action different from the normal action as described above, is provided with further variations.

For example, when a call from an external source is detected under a situation where the virtual creature sits up late at night and plays even if the bedtime has expired, the constitution may be such that the virtual creature is put to bed and rectified to conduct the normal action.

Further, as another variation, when the virtual creature takes a doze in the midst of praying, and a call from an external source is detected under such a situation, the virtual creature may be shaken up and rectified to conduct the normal action.

As has been explained, according to the first aspect of the present invention, the inputting means for inputting a treatment for fostering a virtual creature and the storing unit for storing the control data for fostering the virtual creature are provided and when the treatment for fostering the virtual creature is input from the inputting means, the control data in correspondence thereto is read from the storing unit and a control for fostering the virtual creature is carried out based on the read control data. Further, the detecting means for detecting a call from an external source and the concealing means for randomly concealing the display of the virtual creature from the display unit are provided and when a call from an external source is detected under a situation where the virtual creature is concealed, the virtual creature is unconcealed and the virtual creature can be displayed as usual.

In this way, the concealed virtual creature can be displayed in an original shape by the call of actual human voice of the player and therefore, the invention achieves an effect capable of providing a tasteful simulation device for fostering the virtual creature.

Further, gentle mind for the virtual creature can be fostered when a player earnestly deals with the virtual creature as if he or she were raising an actual creature by which the invention achieves an effect capable of providing a simulation device for fostering a virtual creature that is suitable also in view of education.

According to the second aspect of the present invention, the inputting means for inputting a treatment for fostering a virtual creature and the storing unit for storing the control data for fostering the virtual creature are provided and when a treatment for fostering the virtual creature is input from the inputting means, the control data in correspondence thereto is read from the storing unit and a control for fostering the virtual creature is carried out based on the read control data. Further, the detecting means for detecting a call from an external source and the manifesting means for randomly manifesting an influencing creature effecting an adverse effect on the growth of the virtual creature are provided and when the call from an external source is detected under a situation where the influencing creature is manifested, the influencing creature can be expelled.

In this way, the influencing creature can be expelled by the call of an actual human voice of the player and accordingly, the invention achieves an effect capable of providing a tasteful simulation device for fostering a virtual creature.

Further, a gentle mind for the virtual creature can be fostered when a player earnestly deals with the virtual creature as if he or she were fostering an actual creature and the invention achieves an effect capable of providing a simulation device for fostering a virtual creature which is suitable also in view of education.

According to the third aspect of the present invention, the inputting means for inputting a treatment for fostering a virtual creature and the storing unit for storing the control data for fostering the virtual creature are provided and when the treatment for fostering the virtual creature is input from the inputting means, the control data in correspondence thereto is read from the storing unit and a control for fostering the virtual creature is conducted based on the read control data. Further, the detecting means for detecting a call from an external source and the operating means for having the virtual creature randomly conduct an action that is different from the normal action are provided and the invention achieves an effect where when a call from an external source is detected under a situation where the virtual creature conducts an action different from the normal action, the virtual creature may be rectified to conduct the normal action and the virtual creature can be fostered as if it were taken care of actually.

Further, the invention achieves an effect where a player can foster a virtual creature as if he or she were raising an actual creature whereby a tasteful simulation device for fostering a virtual creature can be provided.

Further, according to the fourth aspect of the present invention, a plurality of kinds of virtual creatures having different appearances are stored in the storing unit and the means for taking care of the virtual creature and the means for disciplining the virtual creature in response to a call from the virtual creature when the call is made from the virtual creature during a growth procedure are provided. Further, when the virtual creature is grown, one virtual creature is selected from the stored plurality of kinds of virtual creatures in accordance with the degree of taking care of the virtual creature and the degree of disciplining the virtual creature achieved during the growth procedure and the grown virtual creature is changed to the selected virtual creature.

In this way, the virtual creature is changed into an unexpected virtual creature in accordance with the degree of care and the degree of discipline of the player and therefore, the invention achieves an effect capable of providing a tasteful simulation device for fostering a virtual creature with no loss of interest.

## Claims

1. A simulation device (1) for fostering a virtual creature comprising:
- means (SW1, SW2, SW3) for inputting a treatment for fostering a virtual creature;
- a display unit (13) for displaying the virtual creature;
- a storing unit (3) for storing control data for fostering the virtual creature;
- a control unit (5) whereby when the treatment is input from the inputting means (SW1, SW2, SW3), the control data corresponding to the treatment is read from the storing unit (3) and a control for fostering the virtual creature is carried out based on the read control data;
**characterized by**
- detecting means for detecting a call from an external source;
- wherein the control unit (5) is provided with means for automatically and randomly triggering an adverse situation for the virtual creature which is perceptible to a player via the display unit (13); and
- wherein the control unit (5) is provided with means responsive to the call from the external source during the adverse situation, executing an operation reverting the situation of the virtual creature to a normal situation.

2. A simulation device according to claim 1, wherein
- said means for automatically and randomly triggering an adverse situation is concealing means for concealing the virtual creature from the display unit (13); and
- said means responsive to the call from the external source is releasing means for unconcealing the virtual creature.

3. A simulation device according to claim 1, wherein
- said means for automatically and randomly triggering an adverse situation is manifesting means for manifesting an influencing creature effecting an adverse influence on the growth of the virtual creature;
- said means responsive to the call from the external source is repelling means for repelling the influencing creature; and
- said display unit (13) being capable of displaying the virtual creature and/or the influencing creature.

4. A simulation device according to claim 1, wherein
- said means for automatically and randomly triggering an adverse situation is operating means for having the virtual creature conduct an action which is different from a normal action; and
- said means responsive to the call from the external source is rectifying means for rectifying the virtual creature to carry out the normal action.

5. A simulation device according to any one of claims 1 through 4, wherein
- the storing unit (3) stores a plurality of kinds of virtual creatures having different appearances (KT1 through KT12);
- the control unit (5) is provided with calling means whereby the virtual creature makes a call during a growth procedure;
- the inputting means (SW1, SW2, SW3) is provided with means for taking care of the virtual creature and means for disciplining the virtual creature in response to the call from the virtual creature;
- the control unit (5) is provided with selecting means for selecting one virtual creature from the stored plurality of kinds of virtual creatures in accordance with a degree of taking care of the virtual creature and a degree of disciplining the virtual creature during the growth procedure; and the control unit (5) is provided with changing means for changing the grown virtual creature into the selected one virtual creature.

## Patentansprüche

1. Simulationsvorrichtung (1) zum Pflegen einer virtuellen Kreatur, umfassend:
- eine Einrichtung (SW1, SW2, SW3) zum Eingeben einer Behandlungsmaßnahme zum Pflegen einer virtuellen Kreatur;
- eine Anzeigeeinheit (13) zum Anzeigen der virtuellen Kreatur;
- eine Speichereinheit (3) zum Speichern von Steuerdaten zum Pflegen der virtuellen Kreatur;
- eine Steuereinheit (5), mittels welcher bei Eingabe der Behandlungsmaßnahme von der Eingabeeinrichtung (SW1, SW2, SW3) aus die zu der Behandlungsmaßnahme korrespondierenden Steuerdaten aus der Speichereinheit (3) auslesbar sind und eine Steuerung zum Pflegen der virtuellen Kreatur auf Grundlage der ausgelesenen Steuerdaten durchführbar ist;
**gekennzeichnet durch**
- eine Detektiereinrichtung zum Detektieren eines Rufs von einer externen Quelle ;
- wobei die Steuereinheit (5) mit einer Einrichtung zum automatischen und zufälligen Auslösen einer für die virtuelle Kreatur nachteiligen Situation versehen ist, welche für einen Spieler über die Anzeigeeinheit (13) wahrnehmbar ist;
- wobei die Steuereinheit (5) mit einer Einrichtung versehen ist, welche während der nachteiligen Situation auf den von der externen Quelle stammenden Ruf reagiert und eine Operation ausführt, welche die Situation der virtuellen Kreatur in eine normale Situation zurückführt.

2. Simulationsvorrichtung nach Anspruch 1,
**dadurch gekennzeichnet, dass**
- die Einrichtung zum automatischen und zufälligen Auslösen einer nachteiligen Situation eine Verdeckungseinrichtung zum Verschwindenlassen der virtuellen Kreatur von der Anzeigeeinheit (13) ist; und
- die Einrichtung, welche auf den von der externen Quelle stammenden Ruf reagiert, eine Freigabeeinrichtung zum Aufdecken der virtuellen Kreatur ist.

3. Simulationsvorrichtung nach Anspruch 1,
**dadurch gekennzeichnet, dass**
- die Einrichtung zum automatischen und zufälligen Auslösen einer nachteiligen Situation eine Erscheinungseinrichtung zum Erscheinenlassen einer Beeinflussungskreatur ist, welche einen nachteiligen Einfluß auf das Wachstum der virtuellen Kreatur ausübt;
- die Einrichtung, welche auf den von der externen Quelle stammenden Ruf reagiert, eine Abwehreinrichtung zum Abwehren der Beeinflussungskreatur ist; und
- die Anzeigeeinheit (13) die virtuelle Kreatur und/oder die Beeinflussungskreatur anzeigen kann.

4. Simulationsvorrichtung nach Anspruch 1,
**dadurch gekennzeichnet, dass**
- die Einrichtung zum automatischen und zufälligen Auslösen einer nachteiligen Situation eine Auslöseeinrichtung zum Auslösen einer Verhaltensweise der virtuellen Kreatur ist, welche von einer normalen Verhaltensweise abweicht; und
- die Einrichtung, welche auf den von der externen Quelle stammenden Ruf reagiert, eine Korrektureinrichtung zum Korrigieren der virtuellen Kreatur dahingehend ist, dass sie die normale Verhaltensweise annimmt.

5. Simulationsvorrichtung nach einem der Ansprüche 1 bis 4,
**dadurch gekennzeichnet, dass**
- in der Speichereinheit (3) mehrere Arten virtueller Kreaturen mit verschiedenen Erscheinungsformen (KT1 bis KT12) speicherbar sind;
- die Steuereinheit (5) mit einer Rufeinrichtung versehen ist, mittels welcher die virtuelle Kreatur während einer Wachstumsprozedur einen Ruf hervorbringen kann;
- die Eingabeeinrichtung (SW1, SW2, SW3) mit einer Einrichtung zum Umsorgen der virtuellen Kreatur und einer Einrichtung zum Disziplinieren der virtuellen Kreatur als Reaktion auf den Ruf der virtuellen Kreatur versehen ist;
- die Steuereinheit (5) mit einer Auswähleinrichtung versehen ist, mittels welcher eine virtuelle Kreatur unter Berücksichtigung eines Umsorgungsgrades der virtuellen Kreatur und eines Disziplingrades der virtuellen Kreatur während der Wachstumsprozedur aus den gespeicherten mehreren Arten virtueller Kreaturen auswählbar ist, und
- die Steuereinheit (5) mit einer Verwandlungseinrichtung zum Verwandeln der aufgewachsenen virtuellen Kreatur in die eine ausgewählte virtuelle Kreatur versehen ist.

## Revendications

1. Dispositif de simulation (1) pour soigner une créature virtuelle, comprenant :
des moyens (SW1,SW2,SW3) pour entrer un traitement d'éducation d'une créature virtuelle ;
une unité d'affichage (13) pour visualiser la créature virtuelle ;
une unité de mémoire (3) de stockage de données de commande pour soigner la créature virtuelle ;
une unité de commande (5) par laquelle, lorsque le traitement est entré par les moyens d'entrée (SW1, SW2,SW3), les données de commande correspondant aux traitements sont extraites de l'unité de mémoire (3) et une commande pour soigner la créature virtuelle est exécutée sur la base des données de commande lues ;
caractérisé en ce que :
des moyens de détection sont prévus pour détecter un appel venant d'une source extérieure ;
l'unité de commande (5) comporte des moyens pour déclencher automatiquement et au hasard une situation difficile pour la créature virtuelle, qui est perceptible par un joueur via l'unité d'affichage (13) ; et
l'unité de commande (5) comporte des moyens qui répondent à l'appel de la source extérieure pendant la situation difficile, pour exécuter une opération qui ramène la situation de la créature virtuelle à une situation normale.

2. Dispositif de simulation selon la revendication 1, dans lequel :
lesdits moyens pour déclencher automatiquement et au hasard une situation difficile sont des moyens de dissimulation pour faire disparaître la créature virtuelle de l'unité d'affichage (13) ; et
lesdits moyens qui répondent à l'appel de la source extérieure sont des moyens de libération pour faire réapparaître la créature virtuelle.

3. Dispositif de simulation selon la revendication 1, dans lequel :
lesdits moyens pour déclencher une situation difficile sont des moyens de figuration pour faire figurer une créature d'influence qui produit une mauvaise influence sur l'éducation de la créature virtuelle ;
lesdits moyens qui répondent à l'appel de la source extérieure sont des moyens de répulsion pour repousser la créature d'influence ; et
ladite unité d'affichage (13) peut afficher la créature virtuelle et/ou la créature d'influence.

4. Dispositif de simulation selon la revendication 1, dans lequel :
lesdits moyens pour déclencher automatiquement et au hasard une situation difficile sont des moyens opératoires pour obtenir que la créature virtuelle effectue une action qui est différente d'une action normale ; et
lesdits moyens qui répondent à l'appel de la source extérieure sont des moyens de correction pour redresser la créature virtuelle afin qu'elle exécute l'action normale.

5. Dispositif de simulation selon une quelconque des revendications 1 à 4, dans lequel :
l'unité de mémoire (3) stocke une pluralité de sortes de créatures virtuelles ayant des aspects différents (KT1 à KT12) ;
l'unité de commande (5) comporte des moyens d'appel de sorte que la créature virtuelle émet un appel pendant une procédure d'éducation ;
les moyens d'entrée (SW1,SW2,SW3) comportent des moyens pour prendre soin de la créature virtuelle et des moyens pour discipliner la créature virtuelle en réponse à l'appel de la créature virtuelle ;
l'unité de commande (5) comporte des moyens de sélection pour choisir une créature virtuelle parmi la pluralité stockée de sortes de créatures virtuelles en fonction d'un degré de soin de la créature virtuelle et d'un degré de discipline de la créature virtuelle pendant la procédure d'éducation ; et
l'unité de commande (5) comporte des moyens de changement pour remplacer la créature virtuelle éduquée par ladite créature virtuelle choisie.
